# EUROPÄISCHE PATENTSCHRIFT

(11) **EP 2 226 110 B1**
(45) Veröffentlichungstag und Bekanntmachung des Hinweises auf die Patenterteilung: **09.03.2011**
(21) Anmeldenummer: 10150949.5
(22) Anmeldetag: 18.01.2010
(51) Int. Cl.: B01D 46/42, B01F 5/04, G01M 3/04

(54) **Aufgabeeinrichtung und Verfahren für die Aufgabe eines Testaerosols sowie Vorrichtung zur Filtration eines mit Aerosolen und/oder Stäuben beladenen Gasvolumenstroms**
Discharge device and method for discharging a test aerosol and device for filtering a gas volume flow charged with aerosols and/or dust particles
Dispositif de réalisation et procédé pour la réalisation d'un aérosol de test ainsi que dispositif de filtration d'un flux de volumes de gaz chargé d'aérosols et/ou de poussières

(30) Priorität: 18.02.2009 DE 102009000948
(43) Veröffentlichungstag der Anmeldung: 08.09.2010
(73) Patentinhaber: YIT Germany GmbH, 80992 München (DE)
(72) Erfinder: Martinsteg, Hans, 52159 Roetgen (DE)
(74) Vertreter: Bauer, Dirk

(56) Entgegenhaltungen:
- EP-A1- 0 450 788
- EP-A1- 1 057 515
- JP-A- 58 210 819
- US-A- 4 515 007
- US-A1- 2006 042 359

## Beschreibung

Die vorliegende Erfindung betrifft eine Aufgabeeinrichtung für die Aufgabe eines Testaerosols zur Bestimmung des Abscheidegrades oder zur Durchführung eines Lecktests bei einer Filteranordnung zur Abscheidung von Aerosolen und/oder Stäuben aus einem Gasvolumenstrom umfassend ein Aufgabeelement. Ferner hat die Erfindung eine Vorrichtung zur Filtration eines mit Aerosolen und/oder Stäuben beladenen Gasvolumenstroms nach dem Oberbegriff des Anspruchs 8 sowie ein Verfahren zur Aufgabe eines Testaerosols gemäß dem Oberbegriff des Anspruchs 14 zum Gegenstand.

### Stand der Technik

Verfahren und Vorrichtungen zur Bestimmung des Abscheidegrades oder zur Durchführung eines Lecktests mit einer entsprechenden Aufgabeeinrichtung für das Testaerosol sind bereits zahlreich aus dem Stand der Technik bekannt.

Beispielsweise ist aus der gattungsgemäßen WO 2007/021333 A2 eine in einem Filtergehäuse untergebrachte Filteranordnung bekannt, bei der sich eine ringförmige Aufgabeeinrichtung für das Testaerosol in der Nähe einer auf der Einströmseite des Filtergehäuses gelegenen Absperrklappe befindet. Aufgrund der Notwendigkeit, die Baulänge des Filtergehäuses aus Platzersparnisgründen möglichst klein zu halten, ist der Strömungsweg zwischen der Testaerosol-Aufgabe und dem rohgasseitigen Einströmquerschnitt des Filterelements recht gering. Hieraus ergeben sich Probleme im Hinblick auf die Gleichmäßigkeit der Verteilung des Testaerosols. Bei inhomogener Verteilung des Testaerosols über dem Filterquerschnitt lassen sich jedoch auf der Reingasseite keine hinreichend zuverlässigen . Aussagen über die örtliche Filterwirksamkeit treffen. Auch ist eine Abscheidegradbestim-mung in diesen Fällen kaum möglich, da verlässliche Angaben über die Konzentration des Testaerosols auf der Rohgasseite nicht möglich sind. Eine Vergrößerung des Abstandes zwischen der Testaerosol-Aufgabe und der Filteranordnung lässt sich aus der vorgenannten Notwendigkeit einer platzsparenden Bauweise nicht realisieren, so dass eine Vergrößeten Notwendigkeit einer platzsparenden Bauweise nicht realisieren, so dass eine Vergrößerung der Lauflänge zwischen Testaerosol-Aufgabe und Eintritt in die Filteranordnung kein gangbarer Weg zur Verbesserung der Homogenität der Verteilung des Testaerosols ist.

Die nachveröffentlichte EP 2 090 350 offenbart ein Aufgabeelement, welches über die Filteroberfläche bewegt wird.

### Aufgabe

Aufgabe der vorliegenden Erfindung ist es nun, eine Aufgabeeinrichtung für Testaerosol nach bekannter Art derart weiterzuentwickeln, dass eine möglichst homogene Verteilung des Testaerosols erreicht wird. Eine entsprechende Aufgabe soll an das Verfahren und die Vorrichtung zur Filtration eines mit Aerosolen und/oder Stäuben beladenen Gasvolumenstroms gestellt werden.

### Lösung

Im Hinblick auf die Aufgabeeinrichtung wird die vorgenannte Aufgabe dadurch gelöst, dass das Aufgabeelement einen langgestreckten Austrittsquerschnitt aufweist, wobei das Aufgabeelement in seinem Innenraum mindestens einen sich über den gesamten Strömungsquerschnitt erstreckenden Gleichrichter aufweist, der senkrecht zu der Strömungsrichtung des aufzugebenden Testaerosols angeordnet ist und zur Homogenisierung der Verteilung des Testaerosols dient, wobei das Aufgabeelement mittels einer Verfahreinrichtung senkrecht zu seiner Längsrichtung und über eine Höhe oder Breite eines Filterelements bewegbar ist.

Der Gleichrichter im Innenraum des Aufgabeelements bewirkt, dass der mit dem Testaerosol angereicherte Rohgasstrom zuerst homogenisiert wird, bevor er austritt. Dies ist insbesondere bei sehr beengten Platzverhältnissen in Filteranordnungen vorteilhaft, da - im Gegensatz zu herkömmlichen Aufgabeeinrichtungen - auf eine Homogenisierung des mit Testaerosols beaufschlagten Rohgasstroms auf seinem Weg von der Testaerosol-Aufgabe bis hin zu dem Eintritt in ein Filterelement verzichtet werden kann. Die Homogenisierung des Testaerosols in dem Aufgabeelement bewirkt, dass letztgenanntes unmittelbar vor dem Filterelement positioniert werden kann, was abermals vorteilhaft hinsichtlich der Platzverhältnisse einer Filtereinrichtung ist. Der mindestens eine Gleichrichter bewirkt einen Druckabfall im Innenraum des Aufgabeelements, so dass - einen homogenen Strömungswiderstand über seine Fläche vorausgesetzt - eine gleichmäßige Durchströmung des Gleichrichters über seine gesamte Fläche sichergestellt wird.

Vorteilhafterweise ist der mindestens eine Gleichrichter parallel zu dem Austrittsquerschnitt angeordnet, so dass die Strömungsrichtung des Testaerosols beim Verlassen des

Austrittsquerschnitts der Strömungsrichtung des Testaerosols innerhalb des Aufgabeelements entspricht.

Die Homogenisierung innerhalb des Aufgabeelementes kann dadurch weiter verbessert werden, dass in seinem Innenraum mehrere Gleichrichter in Strömungsrichtung des Testaerosols hintereinander und jeweils in einem Abstand zueinander angeordnet sind. Diese können so vorgesehen sein, dass sie jeweils den gleichen Abstand zueinander aufweisen, also äquidistant angeordnet sind, oder aber jeweils einen unterschiedlichen Abstand zueinander haben.

Die Herstellung des Aufgabeelementes lässt sich besonders einfach gestalten, wenn es als hohler Quader ausgebildet ist und einen rechteckförmigen Austrittsquerschnitt aufweist. Dabei können die Gleichrichter auf einfache Weise als Lochbleche ausgebildet sein. Alternativ kann das Aufgabeelement zum Beispiel die Form eines Halb-Hohlzylinders aufweisen, wobei die Austrittsfläche dennoch die Form eines Rechtecks besitzen kann. Für den Fall, dass ein als zumindest abschnittsweise Halb-Hohlzylinder ausgeformtes Aufgabeelement einen entsprechend gebogenen Austrittsquerschnitt besitzt, verlässt das Testaerosol das Aufgabeelement fächerartig.

Insbesondere ist es vorteilhaft für die Aufgabe eines möglichst homogenen Testaerosolstroms, wenn an dem Austrittsquerschnitt des Aufgabeelements ein Gleichrichter angeordnet ist, mittels dessen der Testaerosolstrom gleichmäßig an die Umgebung abgegeben wird. Dieser Gleichrichter kann beispielsweise als Tuch, Sieb oder Lochblech ausgebildet sein.

Um bereits bei der Einspeisung des Testaerosols in das Aufgabeelement, die typischerweise über einen Einspeisestutzen erfolgt, eine gewisse Vergleichmäßigung des Volumenstroms zu erreichen, ist es gemäß einer vorteilhaften Ausgestaltung der erfindungsgemäßen Aufgabeeinrichtung vorgesehen, dass zwischen einem Einspeisestutzen für das Testaerosol und dem Aufgabeelement eine Vorkammer angeordnet ist, deren Querschnitt in Strömungsrichtung des Testaerosols größer ist als der des Einspeisestutzens und kleiner als der des Aufgabeelementes. Die Vorkammer kann hierbei beispielsweise einen runden oder vieleckigen Querschnitt besitzen.

Dabei ist es hinsichtlich der Homogenisierung des Testaerosols wiederum vorteilhaft, wenn ein Gleichrichter zwischen der Vorkammer und dem Aufgabeelement angeordnet ist und diese voneinander trennt.

Vorrichtungsgemäß wird die eingangs gestellte Aufgabe gelöst durch eine Vorrichtung zur Filtration eines mit Aerosolen und/oder Stäuben beladenen Gasvolumenstroms, mit einem Filtergehäuse, das einen Rohgaseinlass und einen Reingasauslass aufweist und mit mindestens einem Filterelement versehen ist, das einen Innenraum des Filtergehäuses in einen den Rohgaseinlass aufweisenden Rohgasraum und einen den Reingasauslass aufweisenden Reingasraum unterteilt, wobei ein Überströmen des Gasvolumenstroms von dem Rohgasraum in den Reingasraum lediglich durch ein in dem Filterelement befindliches Filtermedium hindurch möglich ist, wobei das Filterelement einen einen Eintrittsquerschnitt umlaufend umgebenden Elementrahmen besitzt, die dadurch gekennzeichnet ist, dass sie eine erfindungsgemäße Aufgabeeinrichtung gemäß der vorgehenden Ausführungen umfasst.

Abhängig von seinen Abmessungen sollte das Aufgabeelement mittels der Verfahreinrichtung gegebenenfalls sowohl in horizontale als auch in vertikale Richtung verfahren werden können, so dass alle Bereiche des Filterelements hinsichtlich seines Abscheidegrades oder einer möglichen Fehlstelle mittels des Testaerosols untersucht werden können. Somit wird der gesamte Filterquerschnitt abschnittsweise mit Testaerosol in bekannter Menge beziehungsweise Konzentration beaufschlagt.

Ein wesentlicher Vorteil der erfindungsgemäßen Vorrichtung liegt darin, dass für die Aufgabe eines homogenisierten Testaerosols eine verhältnismäßig kurz ausgebildeter Rohgasraum ausreicht, da das Testaerosol das Aufgabeelement bereits als homogenisierter Volumenstrom verlässt, der unmittelbar zur Durchführung einer Messung herangezogen werden kann.

Trotz beengter Platzverhältnisse in dem Filtergehäuse kann der gesamte Querschnitt des Filterelements zuverlässig mit einem homogenen Testaerosol erreicht werden, indem an mehreren Bereichen das Testaerosol aufgeben wird, um für diese Bereiche eine separate Messung der Partikelanzahl und/oder der Partikelkonzentration auf der Reingasseite beispielsweise mit einem aus dem Stand der Technik bekannten Scanner durchzuführen.

Eine vorteilhafte Weiterbildung der Vorrichtung sieht vor, dass sich das Aufgabeelement mindestens über die gesamte Breite und einen Teil der Höhe des Filterelements erstreckt, wobei das Aufgabeelement über die Höhe des Filterelements bewegbar ist.

Folglich kann das Testaerosol mittels der erfindungsgemäßen Aufgabeeinrichtung zwar über die gesamte Breite des Filterelements, jedoch nicht über seine gesamte Höhe gleichzeitig aufgebracht werden. Um dennoch alle Bereiche des Filterelements hinsichtlich seines Abscheidegrades oder einer möglichen Fehlstelle mittels des Testaerosols untersuchen zu können, wird das Aufgabeelement entsprechend bewegt, so dass der gesamte Filterquerschnitt abschnittsweise mit Testaerosol in bekannter Menge beziehungsweise Konzentration beaufschlagt wird. Das Aufgabeelement muss hierbei lediglich in eine Richtung linear beweglich gelagert werden.

Es ist gleichfalls denkbar, dass die Aufgabeeinrichtung derart vor einem Filterelement platziert wird, dass sich das Aufgabeelement über die gesamte Höhe des Filterelements erstreckt, jedoch nicht über seine gesamte Breite. Hierzu müsste die Aufgabeeinrichtung lediglich um 90° gedreht werden, wobei das Aufgabeelement mittels der Verfahreinrichtung über die Breite des Filterelements bewegt würde.

Es ist von Vorteil, wenn die Höhe des Austrittsquerschnitts derart an die Abmessungen des Filterelementes angepasst ist, dass die Fremdeinflüsse an den horizontal verlaufenden Rändern des Austrittsquerschnitts, die durch die im Rohgasraum einer Filteranordnung strömende Rohluft verursacht werden können, minimiert werden. Dies ist der Fall, wenn das Filterelement Falten eines flächigen Filtermediums aufweist und die Höhe des Austrittsquerschnitts der Höhe von etwa vier bis sechs Falten eines Filterelementes entspricht.

Eine Falte ist im vorliegenden Fall so definiert, dass sie zwei parallel zueinander verlaufende Abschnitte des Filtermediums und einen diese verbindenden "Kurvenabschnitt" etwa in Form eines Halbkreises umfasst. Folglich ist eine Falte immer zu einer Seite hin offen und umgibt einen bestimmten Freiraum, der - ausgehend von der offenen Seite der Falte - von dem Testaerosol durchströmt wird, wobei letztgenanntes ebenfalls durch die parallelen Abschnitte des Filtermediums strömt und somit gefiltert wird.

Zwar werden die Fremdeinflüsse bei einer Höhe des Austrittsquerschnitts entsprechend der Höhe von vier bis sechs Falten nicht vollkommen verhindert, jedoch beeinflussen diese lediglich jeweils einen kleinen oberen und unteren horizontalen Randbereich des Testaerosolstroms, was für eine Testmessung insofern unkritisch ist, wenn nur die Qualität der außerhalb der Fremdeinflüsse befindlichen Falte(n), also der mittleren Falte(n), getestet wird.

Zur Durchführung einer Testmessung ist es insbesondere vorteilhaft, wenn die Aufgabeeinrichtung derart angeordnet ist, dass die Strömungsrichtung des aufzugebenden Testaerosols senkrecht zu der Längsrichtung der Falten des Filterelements verläuft. Dies bedeutet, dass das einströmende Testaerosol zunächst parallel zu den vorgenannten parallelen Abschnitten der Falten verläuft. Auf diese Weise wird erreicht, dass bei einer Messung eine der Höhe des Testaerosolstroms entsprechende Anzahl an Falten des Filterelementes geprüft werden, wobei keine Vermischung mit etwaigen Fremdeinflüssen erfolgt. Dementsprechend werden die Vorraussetzungen für eine aussagekräftige Testmessung optimiert.

Eine besonders vorteilhafte Ausgestaltung der erfindungsgemäßen Vorrichtung sieht vor, dass die Austrittsfläche des Aufgabeelementes einen Abstand zu einer Eintrittsfläche des Filterelementes aufweist, der kleiner als 20 mm, vorzugsweise kleiner 10 mm ist. Hierdurch ist der Weg, den das Testaerosol nach Austritt aus dem Aufgabeelement bis zur Eintrittsfläche des Filterelements zurücklegen muss, minimal, so dass wiederum etwaige Fremdeinflüsse aus dem ansonsten in dem Rohgasraum befindlichen Gasvolumenstrom ausgeschlossen werden können.

Vorteilhafterweise ist der Querschnitt des Filtergehäuses der Vorrichtung zumindest in Strömungsrichtung des Gasvolumenstroms betrachtet vor dem Filterelement größer als der Eintrittsquerschnitt des Filterelements, wobei das Aufgabeelement mittels der Verfahreinrichtung in eine Parkposition verfahrbar ist, in der es sich seitlich neben dem Eintrittsquerschnitt befindet. Hierzu kann das Filtergehäuse entweder als Ganzes deutlich größer ausgebildet sein als das Filterelement, so dass letztgenanntes in vertikaler Richtung zu beiden Seiten hin einen Abstand zu dem Filtergehäuse aufweist. Alternativ kann das Filtergehäuse nur im Bereich vor dem Filterelement einen größeren Querschnitt aufweisen oder aber lediglich eine "Parktasche" in Form einer Ausbuchtung besitzen. Ist das Aufgabeelement in seiner Parkposition positioniert, so liegt der gesamte Durchströmungsquerschnitt des Filterelements frei, das somit einwand- und störeinflussfrei betrieben werden kann. Zum anderen kann die Parkposition des Aufgabeelements genutzt werden, Testmessungen bezüglich der Konzentration des Testaerosolstroms durchzuführen. Hierzu bedarf es lediglich einer Messsonde, die in Strömungsrichtung des Testaerosols hinter dem Aufgabeelement in der Parktasche platziert wird.

Verfahrenstechnisch wird die eingangs genannte Aufgabe dadurch gelöst, dass das Testaerosol mittels eines Aufgabeelements in Strömungsrichtung des Gasvolumenstroms betrachtet vor einem Filterelement der Filteranordnung in einen Rohgasstrom aufgegeben wird, wobei das Testaerosol im Inneren des Aufgabeelements homogenisiert wird und über einen Austrittsquerschnitt über mindestens eine Teilbreite des Filterelements homogen abgegeben wird, wobei das Aufgabeelement quer zur Strömungsrichtung bewegt wird.

Eine Bewegung des Aufgabeelements kann dabei sowohl in horizontale als auch in vertikale Richtung erfolgen, so dass in Abhängigkeit von den Abmessungen des Abgabeelements der gesamte Eintrittsquerschnitt des Filterelements erreicht werden kann. Es ist zu beachten, dass die Strömungsgeschwindigkeit des Testaerosolstroms im Austrittsquerschnitt in etwa die Geschwindigkeit des Rohgasvolumenstroms besitzt. Das vorbeschriebene Verfahren kann besonders einfach mit der erfindungsgemäßen Aufgabeeinrichtung durchgeführt werden, wobei sich die bereits angeführten Vorteile ergeben.

Vorteilhafterweise wird das Testaerosol über die gesamte Breite des Filterelements abgegeben und das Aufgabeelement senkrecht zu seiner Längsrichtung bewegt.

Des weiteren ist es von Vorteil, wenn das Testaerosol so abgegeben wird, dass zwischen dem Austrittsquerschnitt und dem entsprechenden Teilbereich des Eintrittsquerschnitts des Filterelements eine homogene Konzentration an Testaerosol vorliegt.

Ein sehr großer Vorteil des erfindungsgemäßen Prinzips der Testaerosol-Aufgabe ist die Möglichkeit zur Anwendung bei mehreren parallel angeordneten Filterelementen, zum Beispiel Filterwänden. Senkrecht übereinander angeordnete Filterelemente könnten dabei durch ein senkrecht verfahrbares Aufgabeelement mit Testaerosol beaufschlagt werden. Bei waagerechter Anordnung mehrerer Filterelemente wären entsprechend viele Aufgabeeinheiten nebeneinander vorzusehen.

### Ausführungsbeispiel

Die Erfindung wird nachfolgend anhand von zwei Ausführungsbeispielen für eine erfindungsgemäße Vorrichtung zur Filtration eines mit Aerosolen und/oder Stäuben beladenen Gasvolumenstroms, die in den Figuren schematisch dargestellt sind, näher erläutert.

Es zeigt:
- Fig. 1:: einen Vertikalschnitt durch eine erfindungsgemäße Vorrichtung,
- Fig. 2:: einen Vertikalschnitt durch eine alternative Vorrichtung mit zwei in Reihe geschalteten Filterelementen,
- Fig. 3:: eine dreidimensionale Darstellung eines erfindungsgemäßen Aufgabeele- mentes,
- Fig. 4:: eine Vergrößerung der Figur 1 im Bereich des Aufgabeelementes und
- Fig. 5:: eine weitere Vergrößerung der Figur 1 im Bereich des Aufgabeelementes.

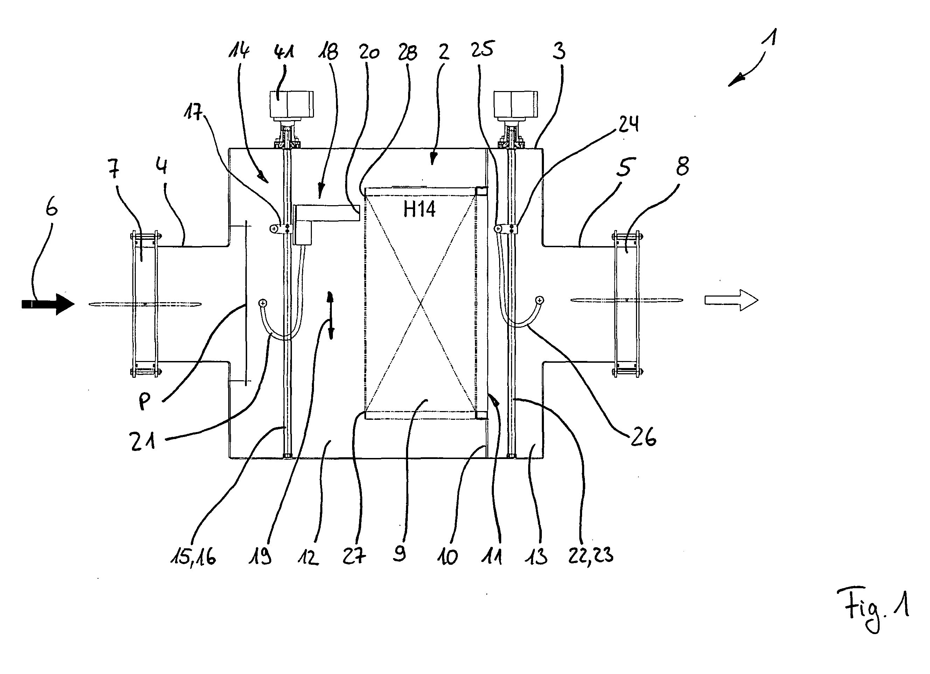

Die Figur 1 zeigt einen Vertikalschnitt durch eine erfindungsgemäße Vorrichtung 1 mit einer Filteranordnung 2, die in einem im Wesentlichen quaderförmigen Filtergehäuse 3 untergebracht ist. Das Filtergehäuse 3 besitzt einen rohgasseitigen Anschlussstutzen 4 und einen reingasseitigen Anschlussstutzen 5. Die Strömungsrichtung ist durch den Pfeil 6 veranschaulicht. Sowohl im rohgasseitigen als auch im reingasseitigen Anschlussstutzen 4, 5 befindet sich jeweils eine Absperrklappe 7, 8. Im Inneren des Filtergehäuses 3 befindet sich ein Filterelement 9 in Form einer quaderförmigen HEPA-Filterzelle. Das Filterelement 9 ist unter Zwischenschaltung bekannter Dichtungen gegen Randstreifen eines Elementrahmens 10 gepresst, der eine dem Eintrittsquerschnitt des Filterelements 9 entsprechende Durchlassöffnung 11 besitzt.

Das Filterelement 9 und der Elementrahmen 10, der umlaufend dicht an das Filtergehäuse 3 angeschlossen ist, unterteilen das Filtergehäuse 3 in einen Rohgasraum 12 und einen Reingasraum 13. Ein in Richtung des Pfeils 6 einströmender Gasvolumenstrom, aus dem mitgeführte Aerosole abgeschieden werden sollen, kann somit nur über das Filtermedium des Filterelements 9 von dem Rohgasraum 12 in den Reingasraum 13 und somit aus dem abströmseitigen Anschlussstutzen 5 hinaus gelangen, wobei der einströmende Gasvolumenstrom unmittelbar nach Eintritt in den Rohgasraum 12 auf eine Prallplatte P trifft. Diese kann alternativ als Gleichrichter ausgebildet sein.

In dem Rohgasraum 12 befindet sich eine Aufgabeeinrichtung 14 zur Aufgabe eines Testaerosols mit einer Verfahreinrichtung 15 in Form einer sich über die gesamte Höhe des Filtergehäuses 3 erstreckenden Spindel 16, an der ein Mutterelement 17 befestigt ist, mit dem ein quaderförmiges Aufgabeelement 18 verbunden ist, das sich im Wesentlichen über die gesamte Breite des Filtergehäuses 3 erstreckt. Das Aufgabeelement 18 ist durch nicht gezeigte vertikale Führungen an einer Drehung um die Spindelachse gehindert, so dass bei einer durch einen Drehantrieb 41 hervorgerufenen Rotation der Spindel 16 um ihre Achse das Mutterelement 17 zusammen mit dem Aufgabeelement 18 eine vertikale Bewegung in Richtung des Doppelpfeils 19 ausführt.

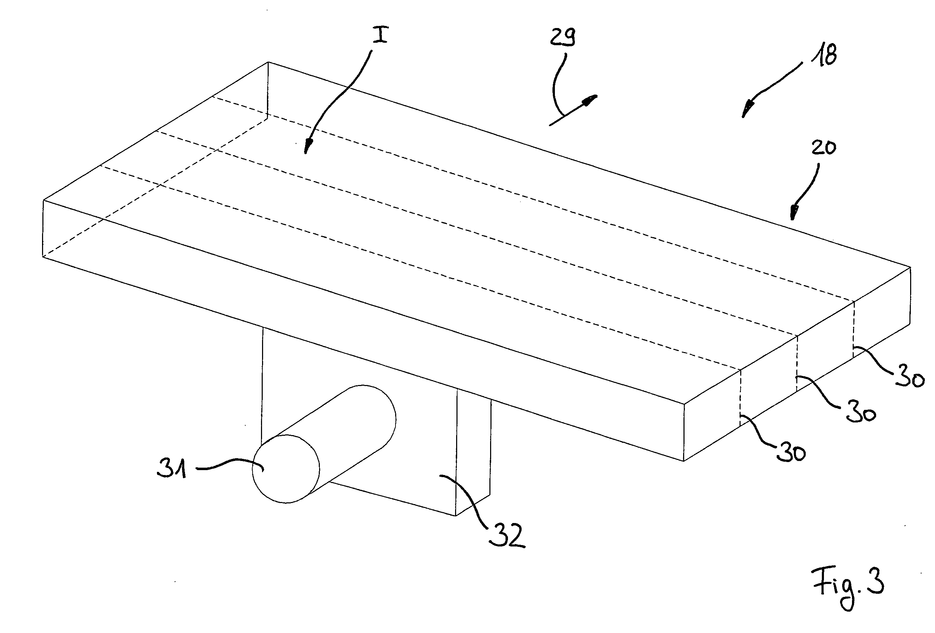

Das Aufgabeelement 18 weist einen Austrittsquerschnitt 20 auf, durch den aus dem Innenraum I des Aufgabeelements 18 heraus Testaerosol in den Rohgasraum 12 abgegeben wird. Das Innere I des Aufgabeelements 18 ist über eine elastische Schlauchleitung 21 mit Testaerosol aus einer externen Einrichtung versorgbar, wobei die Versorgung des Aufgabeelements 18 über ein in der Figur 1 nicht dargestelltes Absperrorgan unterbrechbar ist. Der detaillierte Aufbau des Aufgabeelementes geht aus Figur 3 hervor.

In dem Reingasraum 13 befindet sich ebenfalls eine Verfahreinrichtung 22, bestehend aus einer Spindel 23 und einem damit gekoppelten Mutterelement 24, das mit einem Aufnahmeelement 25 gekoppelt ist, das im Gegensatz zu dem Aufgabeelement 18 eine rohrförmige Gestalt besitzt. Das Aufnahmeelement 25 ist mit einem über die gesamte Breite des Filtergehäuses 3 offenen Schlitz 40 bzw. mehreren durch Stegen getrennten Einzeischlitzen, durch den ein Teilvolumenstrom des Reingasstromes in das Aufnahmeelement 25 ableitbar und von dort über eine elastische Schlauchleitung 26 mit einem nicht in der Figur gezeigten Absperrorgan zu einer nicht dargestellten Messeinrichtung weiterleitbar ist.

In einer bevorzugten Betriebsweise wird das Aufgabeelement 18 zunächst so positioniert, dass es auf Höhe einer Oberkante 28 der Durchlassöffnung 11 positioniert ist. Auf dieselbe Höhe wird auch das Aufnahmeelement 25 zur Entnahme des Teilgasvolumenstroms zur Partikelmessung positioniert. Wird über das Aufgabeelement 18 sodann Testaerosol in den Rohgasraum 12 abgegeben, kann durch Messung des auf der Reingasseite 13 entnommenen Teilvolumenstroms die Wirksamkeit des Filters durch die dortige Partikelzählung überprüft werden. Synchron mit dem Aufgabeelement 18 wird auch das Aufnahmeelement 25 auf der Reingasseite verfahren. Diese Prozedur wird so lange fortgesetzt, bis das Aufgabeelement 18 schließlich einen Teststreifen abdeckt, der an eine Unterkante 27 der Durchlassöffnung 11 anschließt, wobei sich das Aufnahmeelement 25 zu diesem Zeitpunkt in derselben Position befindet.

Bei der zuvor beschriebenen Betriebsweise kann die Beaufschlagung mit Testaerosol während der Verfahrbewegung des Aufgabeelements 18 sowie des Aufnahmeelements 25 unterbrochen werden, sie kann jedoch auch während dieser Zeit fortgesetzt werden. Alternativ zu der schrittweisen Verfahrbewegung und dem anschließenden Stillstand des Aufgabeelements 18 sowie des Aufnahmeelements 25 während der Messphase kann auch ein hinreichend langsames kontinuierliches Verfahren sowohl des Aufgabeelements 18 als auch des Aufnahmeelements 25 durchgeführt werden.

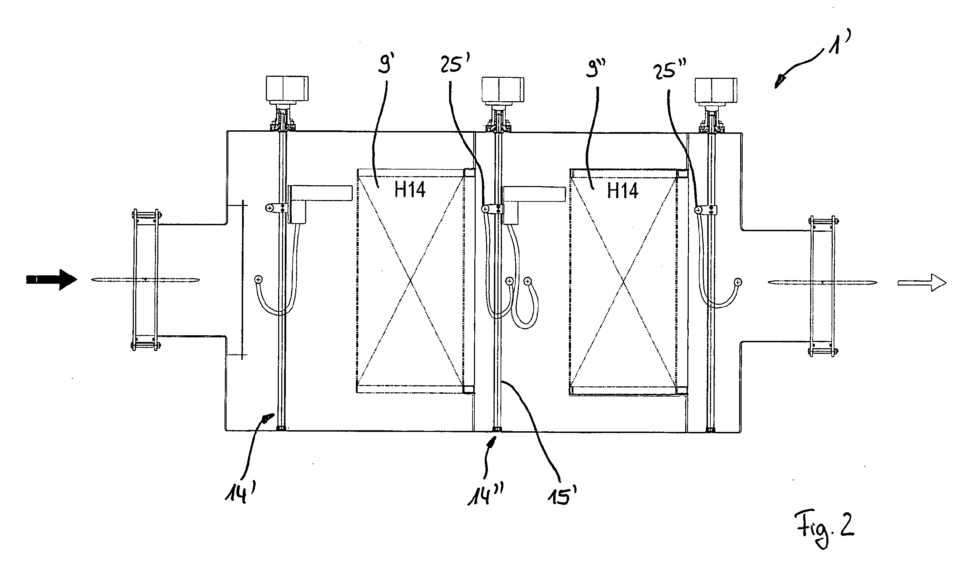

In der Figur 2 ist eine weitere erfindungsgemäße Vorrichtung 1' im Vertikalschnitt abgebildet, die im Unterschied zu der Vorrichtung 1 aus Figur 1 über ein Filtergehäuse 3' verfügt, in dem zwei in Reihe geschaltete Filterelemente 9', 9" angeordnet sind. Um die beiden Filterelemente 9', 9" separat voneinander überprüfen zu können, ist vor jedem Filterelement 9', 9" eine Aufgabeeinrichtung 14', 14" zur Aufgabe des Testaerosols nach vorbeschriebener Art vorgesehen. In Strömungsrichtung betrachtet befindet sich hinter jedem Filterelement 9', 9" ein Aufnahmeelement 25', 25" zur Überprüfung der Partikelkonzentration des gefilterten Gasvolumenstroms. Das Aufnahmeelement 25' des ersten Filterelements 9' teilt sich die Verfahreinrichtung 15' mit der Aufgabeeinrichtung 14" des zweiten Filterelements 9".

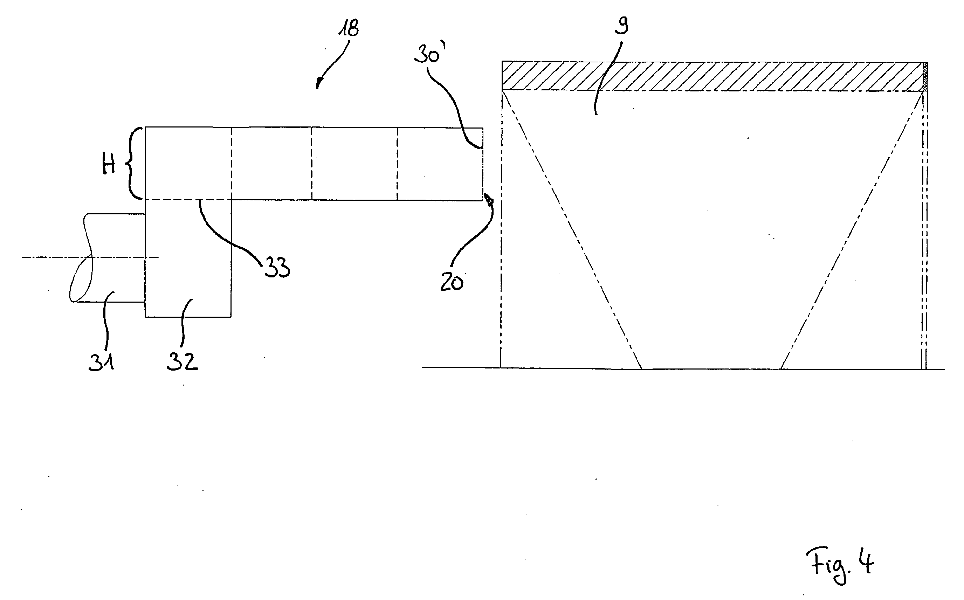

Aus Figur 3 geht der Aufbau des erfindungsgemäßen Aufgabeelementes 18 detailliert hervor. Das quaderförmige Aufgabeelement 18 ist als Hohlkörper ausgebildet, wobei in seinem Innenraum I in Strömungsrichtung 29 des aufzugebenden Testaerosols drei Gleichrichter 30 hintereinander angeordnet sind, die senkrecht zu der Strömungsrichtung 29 verlaufen. Die Gleichrichter 30, die als Lochbleche ausgebildet sind, unterteilen das Aufgabeelement 18 in vier Teilräume und sorgen beim Durchströmen des Testaerosols durch das Aufgabeelement 18 für eine Homogenisierung desselben. Am Austrittsquerschnitt 20 des Aufgabeelements 18 befindet sich ebenfalls ein Gleichrichter 30', der in der Figur 4 erkennbar ist. Dieser ist als Sieb ausgeformt.

Zur Versorgung mit Testaerosol ist das Aufgabeelement 18 über einen Einspeisestutzen 31 mit der Schlauchleitung 21 verbunden, wobei der Einspeisestutzen 31 in eine unterhalb des Aufgabeelements 18 angeordnete quaderförmige Vorkammer 32 mündet, deren Innenraum mit dem Innenraum I des Aufgabeelements 18 verbunden ist. Folglich strömt das zugeführte Testaerosol von der Schlauchleitung 21 über den Einspeisestutzen 31 zunächst in die Vorkammer 32 und von dort in das Aufgabeelement 18, wobei die Vorkammer 32 derart positioniert ist, dass das Testaerosol am in Strömungsrichtung 29 vorderen Ende des Aufgabeelements 18 eingespeist wird. Zwischen dem Aufgabeelement 18 und der Vorkammer 32 ist abermals ein Gleichrichter 33 angeordnet, der in der Figur 4 erkennbar ist.

Die Zwischenschaltung der Vorkammer 32 zwischen Einspeisestutzen 31 und Aufgabeelement 18 bewirkt bereits eine gewisse Verteilung des eingespeisten Testaerosols in dem vorderen Bereich des Aufgabeelements 18, da der Querschnittssprung zwischen der Vorkammer 32 und dem Aufgabeelement 18 deutlich kleiner ist, als der zwischen dem Einspeisestutzen 31 und dem Aufgabeelement 18.

In der Figur 4 ist der Vertikalschnitt der Vorrichtung 1 aus Figur 1 im Bereich des Aufgabeelementes 18 vergrößert dargestellt, wobei die in vertikale Richtung versetzte Anordnung von Einspeisestutzen 31 und Aufgabeelement 18 deutlich wird. Das aufzugebende Testaerosol verlässt den Einspeisestutzen 31 und gelangt in die Vorkammer 32, deren Tiefe der Tiefe des ersten Teilbereichs des Aufgabeelementes 18 entspricht. In der Vorkammer 32 wird das Testaerosol von einer zunächst horizontal ausgerichteten Strömung vertikal nach oben abgelenkt, so dass es von unten in den ersten Teilbereich des Aufgabeelementes 18 einströmt. Hierbei passiert es den Gleichrichter 33, wodurch das Testaerosol bereits erstmals homogenisiert wird. In dem Aufgabeelement 18 wird das Testaerosol wieder in horizontale Richtung umgelenkt und mittels drei hintereinander befindlicher Gleichrichter 30 homogenisiert, bevor es das Aufgabeelement 18 über den im Austrittsquerschnitt 20 befindlichen Gleichrichter 30' verlässt.

Aufgrund der Tatsache, dass das Testaerosol bei Austritt aus dem Aufgabeelement 18 bereits ausreichend homogenisiert ist, kann letztgenanntes mit dem Austrittsquerschnitt 20 unmittelbar vor dem Filterelement 9 angeordnet werden. Der Abstand zwischen Austrittsquerschnitt 20 und dem Eintrittsquerschnitt des Filterelements 9 beträgt lediglich 10 mm. Die Höhe H des Aufgabeelements 18 ist um ein vielfaches kleiner als die Höhe des Filterelements 9.

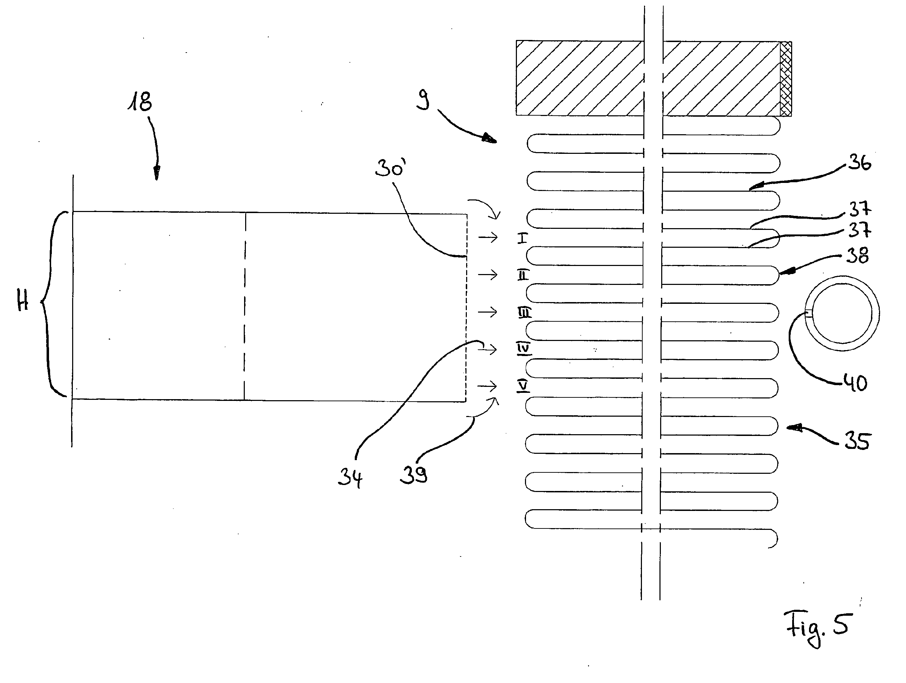

In der Figur 5 ist der Übergangsbereich von Aufgabeelement 18 und Filterelement 9 nochmals vergrößert dargestellt, wobei das ausströmende Testaerosol durch horizontal ausgerichtete Pfeile 34 demonstriert wird. In der Figur 5 sind ferner die einzelnen Falten 35 des Filterelements 9 gezeigt, die durch die mäanderförmige Faltung eines Filtervlieses 36 entstehen. Eine Falte 35 wird hier so verstanden, dass sie jeweils zwei parallel verlaufende Abschnitte 37 des Filtervlieses 36 sowie einen, diese Abschnitte 37 verbindenden gebogenen Bereich 38 umfasst, so dass die einzelnen Falten 35 immer zu der dem Aufgabeelement 18 zugewandten Seite hin offen sind. Das Testaerosol tritt demnach durch die offene Seite einer Falte 35 in das Filterelement 9 ein und durchströmt dann die parallel verlaufenden Abschnitte 37 des Filtervlieses 36.

Die Höhe H des Aufgabeelements 18 entspricht fünf Falten 35 des Filtervlieses 36 und die offenen Seiten der Falten sind in der Figur 5 mit den Ziffern I bis V gekennzeichnet. An der oberen und unteren Kante des Aufgabeelements 18 sind gebogene Pfeile 39 dargestellt, die etwaige Fremdeinflüsse aus dem ansonsten in dem Rohgasraum 12 befindlichen Gasvolumenstrom symbolisieren. Durch die gewählte Höhe H des Aufgabeelements 18 sowie durch den geringen Abstand zwischen Austrittsquerschnitt 20 des Aufgabeelements 18 und Eintrittsquerschnitt des Filterelements 9 sind die auftretenden Fremdeinflüsse jedoch minimal und treten allenfalls im Bereich der beiden äußersten Falten auf, nämlich an den offenen Seiten I und V.

Das auf der gegenüberliegenden Seite des Filterelements 9 befindliche Aufnahmeelement 25 ist derart positioniert, dass es sich mit einem Schlitz 40 unmittelbar vor einer einzelnen Falte 35 des Filterelements 9 befindet und zwar gegenüber der offenen Seite III.

### Bezugszeichenliste:

- 1, 1': Vorrichtung
- 2: Filteranordnung
- 3, 3': Filtergehäuse
- 4: Rohgasseitiger Anschlussstutzen
- 5: Reingasseitiger Anschlussstutzen
- 6: Pfeil
- 7: Absperrklappe
- 8: Absperrklappe
- 9, 9', 9": Filterelement
- 10: Elementrahmen
- 11: Durchlassöffnung
- 12: Rohgasraum
- 13: Reingasraum
- 14, 14', 14": Aufgabeeinrichtung
- 15, 15': Verfahreinrichtung
- 16: Spindel
- 17: Mutterelement
- 18: Aufgabeelement
- 19: Doppelpfeil
- 20: Austrittsquerschnitt
- 21: Schlauchleitung
- 22: Verfahreinrichtung
- 23: Spindel
- 24: Mutterelement
- 25: Aufnahmeelement
- 26: Schlauchleitung
- 27: Unterkante
- 28: Oberkante
- 29: Strömungsrichtung
- 30, 30': Gleichrichter
- 31: Einspeisestutzen
- 32: Vorkammer
- 33: Gleichrichter
- 34: Pfeil
- 35: Falte
- 36: Filtervlies
- 37: Abschnitt
- 38: Gebogener Bereich
- 39: Gebogener Pfeil
- 40: Schlitz
- 41: Drehantrieb

- I: Innenraum des Aufgabeelementes
- P: Prallplatte
- H: Höhe
- I bis V: offene Seite der Falten

## Patentansprüche

1. Aufgabeeinrichtung (14, 14', 14") für die Aufgabe eines Testaerosols zur Bestimmung des Abscheidegrades oder zur Durchführung eines Lecktests bei einer Filteranordnung (2) zur Abscheidung von Aerosolen und/oder Stäuben aus einem Gasvolumenstrom umfassend ein Aufgabeelement (18), **dadurch gekennzeichnet, dass** das Aufgabeelement (18) einen langgestreckten Austrittsquerschnitt (20) aufweist, wobei das Aufgabeelement (18) in seinem Innenraum (I) mindestens einen sich über den gesamten Strömungsquerschnitt erstreckenden Gleichrichter (30) aufweist, der senkrecht zu der Strömungsrichtung des aufzugebenden Testaerosols angeordnet ist und zur Homogenisierung der Verteilung des Testaerosols dient, wobei das Aufgabeelement (18) mittels einer Verfahreinrichtung (15, 15') senkrecht zu seiner Längsrichtung und über eine Höhe oder eine Breite eines Filterelements (9, 9', 9") bewegbar ist.

2. Aufgabeeinrichtung nach Anspruch 1, **dadurch gekennzeichnet, dass** der mindestens eine Gleichrichter (30) parallel zu dem Austrittsquerschnitt (20) angeordnet ist.

3. Aufgabeeinrichtung nach Anspruch 1 oder 2, **dadurch gekennzeichnet, dass** in dem Innenraum (I) des Aufgabeelements (18) mehrere Gleichrichter (30) in Strömungsrichtung des Testaerosols hintereinander und jeweils in einem Abstand zueinander angeordnet sind.

4. Aufgabeeinrichtung nach einem der Ansprüche 1 bis 2, **dadurch gekennzeichnet, dass** das Aufgabeelement (18) als hohler Quader ausgebildet ist und einen rechteckförmigen Austrittsquerschnitt (20) aufweist.

5. Aufgabeeinrichtung nach einem der Ansprüche 1 bis 4, **dadurch gekennzeichnet, dass** an dem Austrittsquerschnitt (20) des Aufgabeelements (18) ein Gleichrichter (30') angeordnet ist, mittels dessen der Testaerosolstrom gleichmäßig an die Umgebung abgegeben wird.

6. Aufgabeeinrichtung nach einem der Ansprüche 1 bis 5, **dadurch gekennzeichnet, dass** zwischen einem Einspeisestutzen (31) für das Testaerosol und dem Aufgabeelement (18) eine Vorkammer (32) angeordnet ist, deren Querschnitt in Strömungsrichtung des Testaerosols größer ist als der des Einspeisestutzens (31) und kleiner als der des Aufgabeelementes (18).

7. Aufgabeeinrichtung nach Anspruch 6, **gekennzeichnet durch** einen Gleichrichter (33), der zwischen der Vorkammer (32) und dem Aufgabeelement (18) angeordnet ist und diese voneinander trennt.

8. Vorrichtung (1, 1') zur Filtration eines mit Aerosolen und/oder Stäuben beladenen Gasvolumenstroms, mit einem Filtergehäuse (3, 3'), das einen Rohgaseinlass (4) und einen Reingasauslass (5) aufweist und mit mindestens einem Filterelement (9, 9', 9") versehen ist, das einen Innenraum des Filtergehäuses (3, 3') in einen den Rohgaseinlass (4) aufweisenden Rohgasraum (12) und einen den Reingasauslass (5) aufweisenden Reingasraum (13) unterteilt, wobei ein Überströmen des Gasvolumenstroms von dem Rohgasraum (12) in den Reingasraum (13) lediglich durch ein in dem Filterelement (9, 9', 9") befindliches Filtermedium hindurch möglich ist, wobei das Filterelement (9, 9', 9") einen einen Eintrittsquerschnitt umlaufend umgebenden Elementrahmen (10) besitzt, **gekennzeichnet durch** eine Aufgabeeinrichtung (14, 14', 14") gemäß einem der Ansprüche 1 bis 7.

9. Vorrichtung nach Anspruch 8, **dadurch gekennzeichnet, dass** sich das Aufgabeelement (18) mindestens über die gesamte Breite und einen Teil der Höhe des Filterelements (9, 9, 9") erstreckt, wobei das Aufgabeelement (18) über die Höhe des Filterelements (9, 9', 9") bewegbar ist.

10. Vorrichtung nach Anspruch 8 oder 9, **dadurch gekennzeichnet, dass** das Filterelement (9, 9', 9") Falten (35) eines flächigen Filtermediums aufweist und die Höhe des Austrittsquerschnitts (20) der Höhe von vier bis sechs Falten (35) entspricht.

11. Vorrichtung nach einem der Ansprüche 8 bis 10, **dadurch gekennzeichnet, dass** die Aufgabeeinrichtung (14, 14', 14") derart angeordnet ist, dass die Strömungsrichtung des aufzugebenden Testaerosols senkrecht zu der Längsrichtung der Falten (35) des Filterelements (9, 9', 9") verläuft.

12. Vorrichtung nach einem der Ansprüche 8 bis 11, **dadurch gekennzeichnet, dass** der Austrittsquerschnitt (20) des Aufgabeelements (18) einen Abstand zu dem Eintrittsquerschnitt des Filterelementes (9, 9', 9") aufweist, der kleiner als 20 mm, vorzugsweise kleiner 10 mm ist.

13. Vorrichtung nach einem der Ansprüche 8 bis 10, **dadurch gekennzeichnet, dass** der Querschnitt des Filtergehäuses (3, 3') zumindest in Strömungsrichtung des Gasvolumenstroms betrachtet vor dem Filterelement (9, 9', 9") größer ist als der Eintrittsquerschnitt des Filterelements (9, 9', 9"), wobei das Aufgabeelement (18) mittels der Verfahreinrichtung (15, 15') in eine Parkposition verfahrbar ist, in der es sich seitlich neben dem Eintrittsquerschnitt befindet.

14. Verfahren zur Aufgabe eines Testaerosols zur Bestimmung des Abscheidegrades oder zur Durchführung eines Lecktests bei einer Filteranordnung (2) zur Abscheidung von Aerosolen und/oder Stäuben aus einem Gasvolumenstrom, wobei das Testaerosol mittels eines Aufgabeelements (18) in Strömungsrichtung des Gasvolumenstroms betrachtet vor einem Filterelement (9, 9', 9") der Filteranordnung (2) in einen Rohgasstrom aufgegeben wird, **dadurch gekennzeichnet, dass** das Testaerosol im Inneren (I) des Aufgabeelements (18) homogenisiert wird und über einen Austrittsquerschnitt (20) des Aufgabeelements (18) über mindestens eine Teilbreite des Filterelements (9, 9', 9") homogen abgegeben wird, wobei das Aufgabeelement (18) quer zur Strömungsrichtung bewegt wird.

15. Verfahren nach Anspruch 14, **dadurch gekennzeichnet, dass** das Testaerosol so abgegeben wird, dass zwischen dem Austrittsquerschnitt (20) und dem entsprechenden Teilbereich des Eintrittsquerschnitts des Filterelements (9, 9', 9") eine homogene Konzentration an Testaerosol vorliegt.

## Claims

1. A feed device (14, 14', 14") for feeding a test aerosol in order to determine filtration efficiency or to carry out a leakage test in a filter arrangement (2) for separating aerosols and/or dusts from a gas volume flow, comprising a feed element (18), **characterised in that** the feed element (18) comprises an elongate discharge cross-section (20), the feed element (18) comprising in its interior (I) at least one rectifier (30) extending over the entire flow cross-section, arranged perpendicular to the direction of flow of the test aerosol to be fed and used to homogenise the distribution of the test aerosol, the feed element (18) being movable perpendicular to its longitudinal direction and over a height or width of a filter element (9, 9', 9") by means of a displacement device (15, 15').

2. The feed device according to claim 1, **characterised in that** the at least one rectifier (30) is arranged parallel to the discharge cross-section (20).

3. The feed device according to either claim 1 or claim 2, **characterised in that** a plurality of rectifiers (30) are arranged behind one another in the interior (I) of the feed element (18) in the direction of flow of the test aerosol and in each case spaced from one another.

4. The feed device according to any one of claims 1 to 2, **characterised in that** the feed element (18) is configured as a hollow cuboid and comprises a rectangular discharge cross-section (20).

5. The feed device according to any one of claims 1 to 4, **characterised in that** a rectifier (30') is arranged on the discharge cross-section (20) of the feed element (18), by means of which rectifier the test aerosol flow is released uniformly into the surrounding environment.

6. The feed device according to any one of claims 1 to 5, **characterised in that** a primary chamber (32) is arranged between a feed pipe (31) for the test aerosol and the feed element (18), the cross-section of which primary chamber is greater than that of the feed pipe (31) and smaller than that of the feed element (18) in the direction of flow of the test aerosol.

7. The feed device according to claim 6, **characterised by** a rectifier (33) that is arranged between the primary chamber (32) and the feed element (18) and separates these from one another.

8. A device (1, 1') for filtration of a gas volume flow charged with aerosols and/or dusts, comprising a filter housing (3, 3') that comprises a raw gas intake (4) and a clean gas outlet (5) and is provided with at least one filter element (9, 9', 9") that divides an interior of the filter housing (3, 3') into a raw gas compartment (12) comprising the raw gas intake (4) and a clean gas compartment (13) comprising the clean gas outlet (5), an overflow of the gas volume flow from the raw gas compartment (12) into the clean gas compartment (13) only being possible through a filter medium disposed in the filter element (9, 9', 9"), the filter element (9, 9', 9") having a peripheral element frame (10) surrounding an inlet cross-section, **characterised by** a feed device (14, 14', 14") according to any one of claims 1 to 7.

9. The device according to claim 8, **characterised in that** the feed element (18) extends at least over the entire width and part of the height of the filter element (9, 9', 9"), the feed element (18) being movable over the height of the filter element (9, 9', 9").

10. The device according to either claim 8 or claim 9, **characterised in that** the filter element (9, 9', 9") comprises folds (35) of a planar filter medium and the height of the discharge cross-section (20) corresponds to the height of four to six folds (35).

11. The device according to any one of claims 8 to 10, **characterised in that** the feed device (14, 14', 14") is arranged in such a way that the direction of flow of the test aerosol to be fed extends perpendicular to the longitudinal direction of the folds (35) of the filter element (9, 9', 9").

12. The device according to any one of claims 8 to 11, **characterised in that** the discharge cross-section (20) of the feed element (18) is spaced from the inlet cross-section of the filter element (9, 9', 9") at a distance less than 20 mm, preferably less than 10 mm.

13. The device according to any one of claims 8 to 10, **characterised in that**, before the filter element (9, 9', 9") viewed at least in the direction of flow of the gas volume flow, the cross-section of the filter housing (3, 3') is greater than that of the inlet cross-section of the filter element (9, 9', 9"), the feed element (18) being displaceable by means of the displacement device (15, 15')into a park position in which it is arranged laterally beside the inlet cross-section.

14. A method for feeding a test aerosol in order to determine filtration efficiency or to carry out a leakage test in a filter arrangement (2) for separating aerosols and/or dusts from a gas volume flow, the test aerosol being fed in a raw gas flow, before a filter element (9, 9', 9") viewed in the direction of flow of the gas volume flow, to the filter arrangement (2) by means of a feed element (18), **characterised in that** the test aerosol is homogenised in the interior (I) of the feed element (18) and is homogeneously released over a discharge cross-section (20) of the feed element (18) over at least a partial width of the filter element (9, 9', 9"), the feed element (18) being moved transverse to the direction of flow.

15. The method according to claim 14, **characterised in that** the test aerosol is released in such a way that a homogeneous concentration of test aerosol is present between the discharge cross-section (20) and the corresponding portion of the inlet cross-section of the filter element (9, 9', 9").

## Revendications

1. Dispositif de distribution (14, 14', 14") pour la distribution d'un aérosol de test pour déterminer le taux de séparation ou pour réaliser un essai de fuite sur un ensemble de filtres (2) destiné à séparer des aérosols et/ou des poussières d'un débit volumétrique de gaz, comprenant un élément de distribution (18), **caractérisé en ce que** l'élément de distribution (18) présente une section transversale de sortie allongée (20), l'élément de distribution (18) présentant en son intérieur (I) au moins un redresseur (30) s'étendant sur l'ensemble de la section transversale d'écoulement, qui est disposé à la perpendiculaire du sens d'écoulement de l'aérosol de test à alimenter et qui sert à homogénéiser la distribution de l'aérosol de test, l'élément de distribution (18) étant mobile au moyen d'un dispositif de déplacement (15, 15') à la perpendiculaire du sens longitudinal et sur une hauteur ou une largeur de l'élément filtrant (9, 9', 9").

2. Dispositif de distribution selon la revendication 1, **caractérisé en ce que** l'au moins un redresseur (30) est disposé à la parallèle de la section transversale de sortie (20).

3. Dispositif de distribution selon la revendication 1 ou 2, **caractérisé en ce qu'**à l'intérieur (I) de l'élément de distribution (18), plusieurs redresseurs (30) sont disposés les uns derrière les autres, dans le sens d'écoulement de l'aérosol de test et chaque fois avec un écart mutuel.

4. Dispositif de distribution selon l'une quelconque des revendications 1 à 2, **caractérisé en ce que** l'élément de distribution (18) est conçu sous la forme d'un parallélépipède creux et présente une section transversale de sortie (20) de forme rectangulaire.

5. Dispositif de distribution selon l'une quelconque des revendications 1 à 4, **caractérisé en ce que** sur la section transversale de sortie (20) de l'élément de distribution (18) est disposé un redresseur (30') au moyen duquel le courant d'aérosol de test est restitué de façon régulière dans l'environnement.

6. Dispositif de distribution selon l'une quelconque des revendications 1 à 5, **caractérisé en ce qu'**entre une tubulure d'alimentation (31) de l'aérosol de test et l'élément de distribution (18) est disposée une préchambre (32) dont la section transversale dans le sens d'écoulement de l'aérosol de test est supérieure à celle de la tubulure d'alimentation (31) et inférieure à celle de l'élément de distribution (18).

7. Dispositif de distribution selon la revendication 6, **caractérisé par** un redresseur (33), qui est disposé entre la préchambre (32) et l'élément de distribution (18) et qui les sépare l'un de l'autre.

8. Dispositif (1, 1') de filtration d'un débit volumétrique de gaz chargé d'aérosols et/ ou de poussières avec un corps de filtre (3, 3'), présentant une entrée de gaz brut (4) et une sortie de gaz pur (5) et qui est muni d'au moins un élément de filtration (9, 9', 9") qui divise un espace intérieur du corps de filtre (3, 3') en un espace de gaz brut (12) présentant l'entrée de gaz brut (4) et en un espace de gaz pur (13) présentant la sortie de gaz pur (5), un débordement du débit volumétrique de gaz de l'espace de gaz brut (12) dans l'espace de gaz pur (13) n'étant possible qu'au passage d'un milieu filtrant situé dans l'élément de filtration (9, 9', 9"), l'élément de filtration (9, 9', 9") comportant un cadre d'élément (10) entourant de façon périphérique une section transversale d'entrée, **caractérisé par** un dispositif de distribution (14, 14', 14") selon l'une quelconque des revendications 1 à 7.

9. Dispositif selon la revendication 8, **caractérisé en ce que** l'élément de distribution (18) s'étend au moins sur toute la largeur et sur une partie de la hauteur de l'élément de filtration (9, 9', 9"), l'élément de distribution (18) étant mobile sur la hauteur de l'élément de filtration (9, 9', 9").

10. Dispositif selon la revendication 8 ou 9, **caractérisé en ce que** l'élément de filtration (9, 9', 9") présente des plis (35) d'un milieu en nappe et **en ce que** la hauteur de la section transversale de sortie (20) correspond à la hauteur de quatre à six plis (35).

11. Dispositif selon l'une quelconque des revendications 8 à 10, **caractérisé en ce que** le dispositif de distribution (14, 14', 14") est disposé de sorte que le sens d'écoulement de l'aérosol de test à distribuer s'étende à la perpendiculaire du sens longitudinal des plis (35) de l'élément de filtration (9, 9', 9").

12. Dispositif selon l'une quelconque des revendications 8 à 11, **caractérisé en ce que** la section transversale de sortie (20) de l'élément de distribution (18) présente par rapport à la section transversale d'entrée de l'élément de filtration (9, 9', 9") un écart qui est inférieur à 20 mm, de préférence inférieur à 10 mm.

13. Dispositif selon l'une quelconque des revendications 8 à 10, **caractérisé en ce que**, considéré au moins dans le sens d'écoulement du débit volumétrique de gaz, la section transversale du corps de filtre (3, 3') en amont de l'élément de filtration (9, 9', 9") est supérieure à la section transversale d'entrée de l'élément de filtration (9, 9', 9"), l'élément de distribution (18) étant déplaçable au moyen du dispositif de déplacement (15, 15') dans une position de parcage, dans laquelle il se trouve latéralement à côté de la section transversale d'entrée.

14. Procédé de distribution d'un aérosol de test déterminer le taux de séparation ou pour réaliser un essai de fuite sur un ensemble de filtres (2) destiné à séparer des aérosols et/ou des poussières d'un débit volumétrique de gaz, considéré dans le sens d'écoulement du débit volumétrique de gaz, l'aérosol de test étant distribué au moyen d'un élément de distribution (18) en amont d'un élément de filtration (9, 9', 9") de l'ensemble de filtres (2) dans un courant de gaz brut, **caractérisé en ce que** l'aérosol de test est homogénéisé à l'intérieur (I) de l'élément de distribution (18) et **en ce qu'**il est distribué de façon homogène via une section transversale de sortie (20) de l'élément de distribution (18) sur au moins une largeur partielle de l'élément de filtration (9, 9', 9") l'élément de distribution (18) étant déplacé à la transversale du sens d'écoulement.

15. Procédé selon la revendication 14, **caractérisé en ce que** l'aérosol de test est distribué de telle sorte qu'entre la section transversale de sortie (20) et la zone partielle correspondante de la section transversale d'entrée de l'élément de filtration (9, 9', 9") se trouve une concentration homogène d'aérosol de test.
